# EUROPEAN PATENT APPLICATION

(11) **EP 0 799 838 A1**
(43) Date of publication of application: **08.10.1997**
(21) Application number: 97660036.1
(22) Date of filing: 02.04.1997
(51) Int. Cl.: C08F 4/60, C08F 4/02, C08F 10/00

(54) **Method for preparing olefin polymerization catalysts**

(30) Priority: 03.04.1996 FI 961511
(71) Applicant: Mikrokemia Oy, 02150 Espoo (FI)
(72) Inventor: Iiskola, Eero, 02120 Espoo (FI); Timonen, Sari, 80140 Joensuu (FI); Pakkanen, Tuula, 80100 Joensuu (FI)
(74) Representative: Sundman, Christoffer

(57) **Abstract**

The present invention concerns a procatalyst suitable for preparing olefin polymerization catalysts, a method for preparing said procatalyst and a method for the polymerization of olefins. The procatalyst comprises a support and a transition metal or compound thereof, attached to said support, whereby said transition metal is bonded to the surface of said support via a group having a structure according to the formula R¹SiR²ₘX₍₂₋ₘ₎- (Ia) or the formula Ib -R¹SiR²ⁿX₍₁₋ₙ₎-(Ib), where m is an integer 0, 1 or 2, n is an integer 0 or 1, X is a hydrolyzable group, capable of reacting with the hydroxy groups or the metal-oxygen-metal bridges of an inorganic oxide, R¹ is a nonhydrolyzable group to which said transition metal or said compound thereof is bonded, and R² is a lower alkyl group. The support is prepared most advantageously by reacting an inorganic oxide compound, such as silica or alumina, with a compound having the composition according to the formula R¹SiR²ₘX₍₃₋ₘ₎, where R¹, R², X and m have the same designations as above. The reaction between the inorganic oxide compound and the compound of formula I is carried out under surface-bond-selective conditions. Advantageously, the substituent R¹ designates a hydrocarbon group according to the formula R³R⁴, where R³ is a cyclopentadienyl group and R⁴ is an alkenyl group of 1 - 3 carbons. The invention makes it possible to combine the benefits of homogeneous and heterogeneous catalysts.

## Description

The present invention relates to a procatalyst according to the preamble of claim 1 suitable for the preparation of olefin polymerization catalysts. Generally, such a procatalyst comprises a support and a transition metal or a compound thereof bonded to the support.

The invention also concerns a method according to the preamble of claim 4 for preparing olefin polymerization catalysts. In the method, the catalytically active transition metal or a compound thereof is bonded to the support in order to prepare the procatalyst, and subsequently, the procatalyst is contacted with a cocatalyst in order to prepare a catalytically active product.

The invention further concerns a method according to the preamble of claim 21 for polymerizing olefins.

Ethene and other 1-olefins such as propene, 1-butene, 1-pentene, 1-hexene and 1-octene are homo- and copolymerized in the presence of catalysts. The commonly used catalysts include such transition metal compounds which contain, e.g., halides, oxides and metallocene compounds of the metals of major groups IVA, VA or VIA (Hubbard). The most important halides are chloride and fluoride compounds. Of metallocene compounds, such compounds of the cyclopentadienyl type may be mentioned which contain an unsubstituted or substituted cyclopentadienyl group, indene group, tetrahydroindene group or fluorene group to which the transition metal is bonded.

Transition metal catalysts can be homogenous or heterogeneous. Herein, reference is made to, e.g., the publication by T. Cuenca, J.C. Flores and P. Royo, J. Organometal. Chem., 462, 191 (1993), in which is described the use of homogeneous dicyclopentadienyl titanium and zirconium compounds in the hydrogenation reaction of olefins. However, conventional chloride and oxide compounds as well as a great number of metallocene catalysts are heterogeneous, that is, solid compounds not capable of dissolving in the hydrocarbon medium used in the polymerization process.

In conventional heterogeneous olefin polymerization catalysts, the catalytically active metal compound is bonded to an inorganic support. Typically, these catalysts are prepared in liquid phase by mixing the support, e.g., silicon dioxide or aluminium oxide with a solution of the transition metal (or metals) employed, then drying the product by evaporation, and when desired, prior to polymerization, preparing a suspension of the product into a solution of a suitable cocatalyst compound such as an organic Al compound. Also gas-phase methods are known in the art for the preparation of transition metal catalysts. Thus, FI Patent Specification No. 95,276 describes a method in which a metallocene compound of the transition metal is evaporated and contacted in gas phase with the support. According to the method, the metallocene compound is advantageously used in at least such an amount that the gas phase contains the metallocene compound in an amount corresponding at least to the number of surface-bond sites on the support, or alternatively, in a small excess amount. In both of these alternative embodiments of the method, the procatalyst product is activated by means of an organic aluminium compound acting as a cocatalyst of the polymerization reaction.

Homogeneous catalysts offer a narrow molecular weight distribution (2 - 3), which is advantageous particularly in the manufacture of copolymers. This is because comonomers can be made to disperse homogeneously in the copolymer. However, heterogeneous catalysts have an important benefit over homogeneous catalysts by offering easy processability (cleaning, activation, etc.) of the catalyst. In contrast, a disadvantage is found therein that the support material often interferes with the catalyzed reaction: the catalytic properties of the transition metal and the support are often impossible to distinguish from each other. Resultingly, due to the support, the homo- and copolymerization of ethylene and other 1-olefins with the help of heterogeneous Ziegler-Natta catalysts produces polyolefins with a broad molecular weight distribution (that is, greater than 4 - 5).

It is an object of the present invention to overcome the disadvantages of the prior-art techniques and to provide a novel type of procatalyst for the polymerization of olefins, said procatalyst being capable of combining the benefits of homogeneous and heterogeneous procatalysts. It is a further object of the invention to provide a method for preparing said procatalyst.

The goal of the invention is accomplished by the basic concept of converting a homogeneous transition metal catalyst into heterogeneous form by bonding a transition metal compound to the support via such a spacer compound which can be bonded to the surface of the support by covalent or other stable type of bonds and whose functional effect on the transition metal compound is not dependent on the properties of the support surface.

Most advantageously, the spacer compound used for catalyst heterogenization includes two functional groups of which one is reacted to form a bond (e.g., a covalent bond) with the surface bond sites of the inorganic support (e.g., with hydroxyl groups or tensioned silicon-oxygen-silicon bridges) while subsequent to the first reaction, the other group remains free to undergo a further reaction with the transition metal or its compound. Between these functional groups is adapted a linker serving to isolate said groups from each other.

The transition metal in particular, or a compound thereof, is bonded to the support by
- for the purpose of modifying the support, first bonding to the surface bond sites of the support a compound having the composition defined by formula I

   R¹AR² ₘX₍₃₋ₘ₎ (I)

   in which formula
   - A: is silicon, germanium or tin, which can form a bond with one, two or three oxygen atoms of the support surface,
   - R¹: is a nonhydrolyzable group, capable of forming a bond with the transition metal or its compound and of forming a bond with A via the linker group,
   - R²: is an alkyl group,
   - X: is a hydrolyzable group, capable of reacting with the hydroxy groups or the metal-oxygen-metal bridges of an inorganic oxide, and
   - m: is an integer 0, 1 or 2,
   and then
- reacting said transition metal, or the compound thereof, with the thus modified support.

In formula I, the nonhydrolyzable R¹ group can be cyclopentadienyl or an equivalent group which serves for bonding the transition metals in olefin polymerization catalysts, whereby A is advantageously silicon.

When reacting with the surface of the support, the compound with the composition according to formula (I) is typically bonded to the surface via one or two oxygen groups, whereby to the support surface is bonded a group according to formula Ia

-R¹SiR² ₘX₍₂₋ₘ₎- (Ia)

or according to the following formula Ib

-R¹SiR²ⁿX₍₁₋ₙ₎= (Ib)

wherein
- m: is an integer 0, 1 or 2,
- n: is an integer 0 or 1,
- X: is a hydrolyzable group, capable of reacting with the hydroxy groups or the metal-oxygen-metal bridges of an inorganic oxide,
- R¹: is a nonhydrolyzable group, capable of forming a bond with the transition metal or its compound, and
- R²: is a lower alkyl group,
said groups being capable of forming a bond with said transition metals or compounds thereof thus forming the desired procatalyst.

More specifically, the procatalyst according to the invention is characterized by what is stated in the characterizing part of claim 1.

Furthermore, the method according to the invention for preparing said procatalyst is characterized by what is stated in the characterizing part of claim 4 and the method according to the invention for homo- and copolymerizing olefins is characterized by what is stated in the characterizing part of claim 21.

In the context of the present invention, the term heterogenization is used to refer to the isolation and stabilization of such catalytically active metal compounds which conventionally are unstable in the homogenous phase, by bonding such a spacer compound (heterogenizing compound) which is compatible with the precursor of the catalyst to the surface of an inorganic oxide (e.g., SiO₂, Al₂O₃, TiO₂, ZrO₂).

Heterogenization is discussed in the following publications and others:
1. Y. Iwasawa, in "Tailored metal catalysts", ed. Y. Iwasawa, D. Reidel Publishing Company, Dordrecht, Holland, 1986, p. 1.
2. R. Jackson, J. Ruddlesden, D.J. Thompson and R. Whelan, "Silica-supported analogies of titanocene", J. Organometal. Chem., 125 (1977), 57.
3. F.R.W.P. Wild, G. Gubitosa and H.S. Brintzinger, "Silica-gel supported cyclopentadienyl metal carbonyl complexes", J. Organometal. Chem., 148 (1978), p. 73.
4. T.J. Pinnavaia, J.G.-S. Lee and M. Abedini in "Silylated Surfaces" (eds. D.E. Leyden and W. Collins), Gordon and Breach, New York, 1980, pp. 333-345.

However, none of the above-cited publications make reference to the preparation of an olefin polymerization catalyst according to the present invention, in which catalyst the transition metal compound or complex is anchored to the surface of an inorganic oxide support via 1) a nonhydrolyzable group such as a cyclopentadienyl ring or equivalent group, 2) a linker group such as a methylene chain, for instance, and 3) a silicon atom.

Liquid-phase heterogenization of metallocene compounds acting as polymerization catalysts of olefins is described in EP Published Application No. 0 628 566 (Phillips Petroleum Co.). According to cited document, the heterogenizing compound used is a cyclopentadiene-type compound containing at least one active halogen species. The heterogenizing compound may be described, e.g., by formula Z-A-Xₙ, where Z is a cyclopentadiene radical, A is Si, Ge or Sn, and X is hydrogen, a hydrogen carbyl radical or a halogen.

The heterogenizing compound disclosed in the present invention differs from the prior art by having the transition-metal-bonding group, such as a cyclopentadienyl-type group, not directly attached to the atom forming the bond with the support surface, but instead, having a linker group arranged therebetween serveing for functionally isolating the different groups from each other. Further according to the invention, the heterogenizing compound is attached in vapour phase, advantageously under surface-bond-selective conditions. The benefits of the vapour-phase technique and surface-bond selectivity in particular are discussed more closely below.

Also other methods are known in the art for attaching the cyclopentadienyl groups to the surface of the silica support. Soga et al. [in Soga, K. and Terano, M., "Catalyst Design for Tailor-Made Polyolefins", in the series "Studies in Surface Science and Catalysis", Eds. B. Delmon and J.T. Yates, Vol. 89 (1994), pp. 307-314] have described a multi-step method for preparing Cl₂Zr(Ind)₂Si-SiO₂ catalysts in liquid phase. The method requires several steps including the bonding of silicon tetrachloride to the surface of the silica support, the reaction of the Li-indene compound with the modified support surface first in order to form the indene surface and next to form the Li-indene surface, whereafter the zirconium chloride is bonded to the Li-indene surface. Said reactions are carried out in liquid phase, which requires washing and drying of the support between the subsequent reaction steps. Moreover, the publication by Soga describes the formation of a structure in which the indene group is directly bonded to the silicon atom of the silicon oxide group of the support.

As noted above, the method according to the present invention is advantageously carried out under surface-bond-selective reaction conditions. In the context of the present invention, the term refers to a technique of attaching the reactant in vapour phase to the surface of a solid material (inorganic oxide) under such conditions that the properties of the surface determine the amount of reactant attached to the surface. The preparation of catalysts under surface-bond-selective conditions is described, e.g., in FI Pat. Nos. 84562 and 87892.

In the present method, the reagent with the heterogenizing properties described in the text is attached in vapour phase to the support. The reagent is evaporated separately from the support and the vapourized reagent is taken to a reaction chamber where it is reacted with an inorganic oxide compound acting as the support. During the reaction, the support is maintained at a temperature which is above the vapour condensation temperature and simultaneously so high that the minimum thermal activation energy necessary for the formation of chemical bonds between the heterogenizing compound and the surface bond sites of the support is attained (thus accomplishing the chemisorption of the heterogenizing compound). Through this technique, a support suitable for bonding the transition metal species is achieved.

In the present context, the term "linker group" refers to a bivalent group serving to joint the transition-metal-bonding group with the atom that is bonded to the surface-bond sites of the support surface.

Further, the term "ligand" refers to the entity formed by the nonhydrolyzable group and the linker group.

Finally, the term "surface-bond site" refers to a functional group on the support surface capable of reacting with the transition metal or a compound thereof. The present invention makes use of the reaction of such a functional group with a group having the formula -AR² ₘX₍₃₋ₘ₎. Generally, the surface-bond site is formed by a hydroxyl group or a metal-oxygen-metal bridge, whereby the reaction between the above-mentioned groups provides on the support surface a molecular structure represented by the formula -A(R² ₘ)X(₂₋ₘ)-O-metal atom.

Typically, the reagent suitable for heterogenization includes the compound according to Formula I:

R¹SiR² ₘX₍₃₋ₘ₎

where R¹, R², X and m have the meaning described above.

In Formula I, X is a hydrolyzable group capable of reacting with the hydroxy or metal-oxygen-metal bridges of the inorganic oxide. Advantageously, X is an alkoxy (-OR⁵), carboxylic acid (-OOCR⁵), amine (-NR⁵ ₂) or chlorine (-Cl) group, whereby R⁵ is an aliphatic hydrocarbon chain with 1 - 10 carbon atoms. Most advantageously, X is methoxy or ethoxy.

When reacting with the inorganic oxide, the bond between the silicon atom and the group X in the above-mentioned silane compound is replaced by a bond between the silicon atom and the inorganic compound. As group X, methoxy and ethoxy groups are particularly advantageous, and they release only ethanol or methanol when reacting with water or the hydroxyl groups of the inorganic surface. Chlorinated silanes are considered less advantageous, because they release hydrochloric acid as a side product.

R¹ is a nonhydrolyzable organic group with functional properties, whereby it facilitates bonding with the transition metal compounds either through a chemical reaction or formation of a complex compound.

According to the invention, R¹ in the compound according to formula I is a hydrocarbon group capable of forming a covalent bond with the transition metal. This group is also suitable for bonding the transition metal compound by complexing. R¹ can form a bond with at least one of the following metals or a compound thereof: Sc, Ti, V, Cr, Mn, Fe, Co, Y, Zr, Nb, Mo, Tc, Ru, Rh, Hf, Ta, W, Re, Os and/or Ir. Particularly suitable metals are the metals of the major groups IVA, VA and VIA of the periodic system of elements, whereby special attention should be paid to chromium, hafnium, titanium and zirconium.

According to a preferred embodiment, R¹ is a hydrocarbon group in a composition represented by formula R³R⁴ in which R³ is a group capable of bonding the above-listed transition metals, or compounds thereof, and R⁴ designates a -(CH₂)ₖ group, where k is an integer in the range 1 - 6.

Particularly advantageously, R³ is an unsubstituted or substituted cyclopentadienyl group or a cyclopentadienyl-type group such as an unsubstituted or substituted indene group, tetrahydroindene group or fluorene group capable of bonding the transition metal species. A cyclopentadienyl (Cp) ligand group is a proper selection, because it can form a suitably strong covalent bond in terms of catalytic activity with a great number of transition metals including Fe, Co, Cr, Ti, Zr, Ru, Hf and Rh.

R² is a linear or branched C₁₋₁₀ alkyl group, particularly a lower alkyl group such as a methyl, ethyl, n-propyl and isopropyl, n-butyl, isobutyl and tert-butyl or any pentyl or hexyl group.

R⁴ is a methylene chain advantageously containing 2 - 4 carbons (such as an ethylene, propylene or butylene chain).

The silane compound, (EtO)₃Si(CH₂)₃Cp, mentioned in the examples described below performs as an excellent linker group between the transition metal species and, e.g., a support of large specific area and high porosity such as silicon oxide or aluminium oxide. It is also possible that the methylene chain between the silicon atom and the cyclopentadienyl group can reduce the heterogeneous nature of inorganic oxide supports.

The invention achieves novel catalysts formed from one or several transition metal or a compound thereof such as a compound, particularly a halide or metallocene, of a metal selected from those of the major groups of IVA, VA or VIA, said metal or compound being bonded via a heterogenizing compound to the surface of an oxide support.

The invention offers significant benefits. Firstly, the heterogenization process represents an ideal method of combining the advantages of homogeneous and heterogeneous catalysts in a fashion that simultaneously can eliminate their disadvantages. Secondly, the use of the above-described chemically and structurally well-behaved support surfaces instead of conventional catalysts containing a heterogeneous catalytically active metal species bonded to a conventional support makes it possible to obtain novel basic knowledge on catalysis as a process.

In the present method, the silane compound can be bonded by means of a gas-phase reaction directly to the support material without the need for a clumsy hydrolyzing step of alkoxy silanes and/or use of organic solvents.

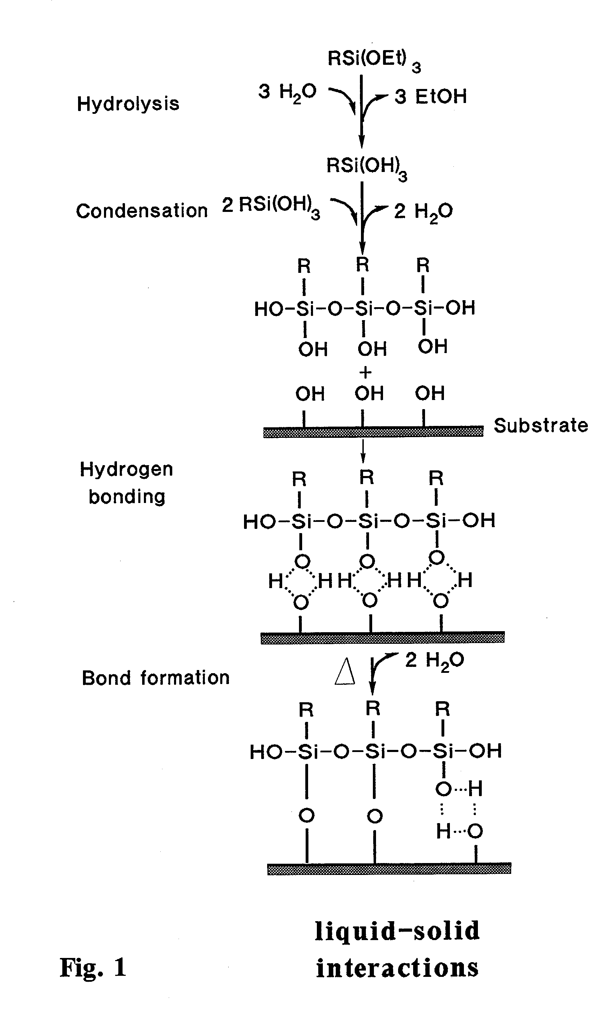

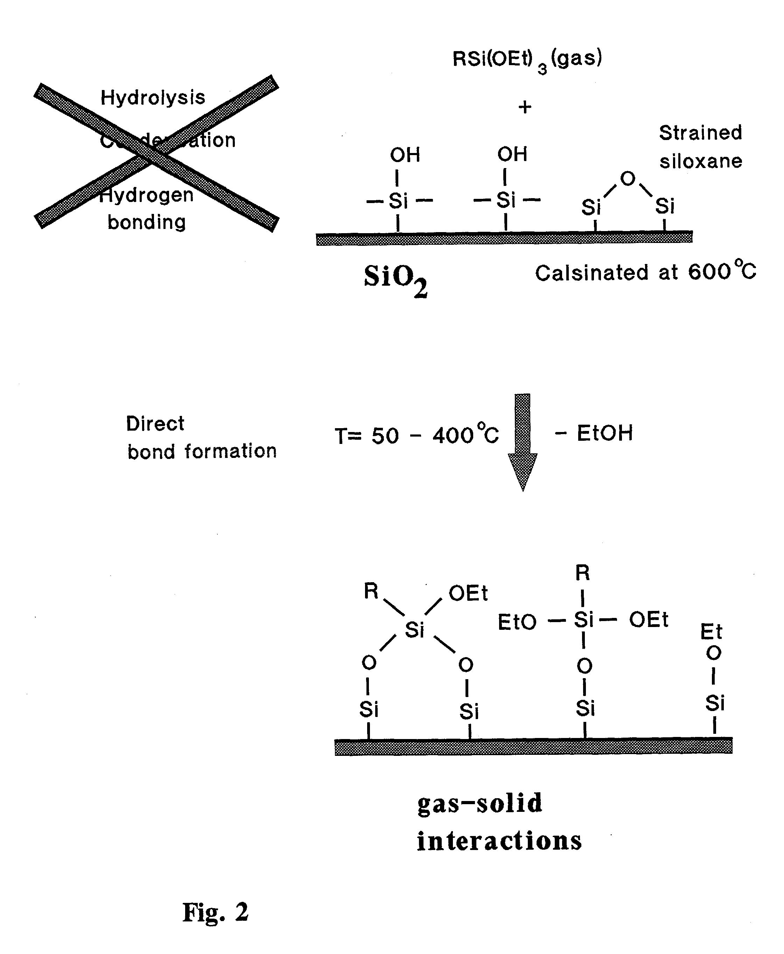

In the appended drawings, refer here to Figs. 1 and 2, are shown the diagrammatic steps of methods for catalyst preparation in liquid phase and gas phase, respectively. The diagram of Fig. 1 is based on the preparation technique described by Witucki [G.L. Witucki, J. Coat. Technol. 65 (1993) 57], while the method according to the invention is illustrated in Fig. 2. As is evident from the diagrams, the technique disclosed by Witucki requires three different reactions for bonding the alkoxy silanes to the support surface. By contrast, the present invention makes it possible to perform the bonding of the cyclopentadienyl silane compound or an equivalent heterogenizing compound to an inorganic material surface in a single step by reacting said compound with the hydroxyl groups and siloxane bridges in a gas phase as is described later in the case of silica. The thus synthesized surface structure can be utilized directly for attaching said transition metal compounds by a covalent bond to the support surface. No solvents or drying steps are required in the preparation of the cyclopentadienyl surface structure.

The modified support surface structure which is prepared according to the present method can be used for attaching almost any transition metal by covalent bonds.

The method according to the present invention has a further benefit in that the preferred heterogenizing reagent, the silane compound (EtO)₃Si(CH₂)₃Cp, is commercially available.

The catalyst system obtained according to the invention is particularly suitable for polymerization of ethylene or copolymerization of ethylene with other alpha-olefins such as propene, butene, 4-methyl-1-pentene and hexene. The catalyst is also usable in gas phase or suspension polymerization. It has been found that in the polymerization of ethylene using a catalyst in which a transition metal compound is bonded to a support surface carrying a diene-ring structure which is prepared according to the invention, together with a methylaluminium oxane (MAO) cocatalyst, the polyethylene product thus obtained has a sufficiently high molecular weight (M_{w} > 100.000) for commercial applications and also has a narrow molecular weight distribution (M_{w}/Mₙ < 3). Such a narrow molecular weight distribution cannot be attained by means of conventional heterogeneous Ziegler-Natta catalysts such as CrO₃/SiO₂ or TiCl₄/MgCl₂ catalysts. It has further been found that the heterogenization of homogeneous metallocene catalyst precursors such as CpZrCl₃ bonded to an inorganic oxide support without utilizing the advantageous modification of the inorganic oxide causes a significant reduction of catalytic activity when such a composition is used in the polymerization of alpha-olefins, as will be evident from the comparative examples of the present invention.

Catalyst activity can be improved essentially by treating the prepared catalyst with an aluminium alkyl compound in gas phase. Moreover, it has been found that the temperature of the linker compound bonding reaction affects catalyst activity. Bonding at an elevated temperature improves the activity, which plausibly is traceable to a more controlled surface structure of the catalyst.

In the following, the invention will be described more closely with reference to a detailed description, an exemplifying embodiment and the attached drawings in which
Figure 1 is a schematic diagram of the bonding process of alkoxy silanes to a substrate in liquid phase, and
Figure 2 is a schematic diagram of the bonding process of alkoxy silanes to a substrate under surface-bond-selective conditions.

According to a preferred embodiment of the invention, the preparation of the catalyst comprises the following steps:
1) Pretreatment of the oxide support, 2) evaporation of the surface treatment reagent(s) and attachment thereof to the support surface in order to prepare a modified support, 3) attachment of transition metal to the surface of the modified support, and 4) optional treatment of the catalyst with organic aluminium compounds. Steps 1 - 3 are also illustrated in Fig. 2, wherein the attachment of an ethoxysilane compound to a silica support is elucidated.

Purging with an inert gas can be performed between steps 2 and 3 as well as between steps 3 and 4 when desired.

According to the present invention, all reagents for steps 1 and 2 are taken into the reaction chamber in vapour phase, typically one component at a time.

In the first step of the method, the support can be subjected to a pretreatment at elevated temperatures prior to the actual bonding reaction. The support is most advantageously silicon dioxide, aluminium oxide, silicon dioxide-aluminium oxide, magnesium oxide, magnesium silicate, titanium oxide or zirconium oxide. It may also be a natural or synthetic zeolite. Such a heat treatment can be used to modify the number and nature of OH groups, and thereby, the amount of metal compounds bonded to the support surface. The maximum temperature applicable during the pretreatment of silicon dioxide supports is about 900 °C, while aluminium oxide is advantageously pretreated at a maximum temperature of 800 - 900 °C. In Fig. 2, the typical pretreatment temperature of silica is cited as 600 °C.

The number of OH groups can be reduced by subjecting the support to an elevated pretreatment temperature. The duration of the heat pretreatment is 1 - 40 hours, preferably 2 - 24 hours.

Instead of heat treatment, or in addition thereto, the support can also be pretreated by contacting the support with suitable compounds that are capable of modifying the support surface in an advantageous manner. Thus, a silicon dioxide support can be treated with an aluminium compound. By reacting aluminium chloride and water vapour with a silicon dioxide support, an Al₂O₃ layer can be formed.

As is evident from the diagram, after the pretreatment the support surface has chiefly two types of groups capable of acting as surface-bond sites, namely, hydroxyl groups and siloxane bridges.

In the next step of the method, the evaporated heterogenizing or surface treatment reagent is chemisorbed to the support surface by contacting the reagent vapours with the surface. By virtue of the direct gas/solid surface reaction, no solvents or washing of the product are needed in the process. The vapour pressure of the evaporated compound is maintained sufficiently high and the time of interaction with the support material sufficiently long during the process so that all the surface-bond sites on the support material will be saturated, or alteratively supersaturated, with the catalytically active component or a precursor thereof. The excess amount of the active component used in the process as compared to the minimum concentration required for complete saturation of all available surface-bond sites on the support surface is typically 1 - 100-fold, preferably 1 - 3-fold. The amount of the heterogenizing compound required for forming a monolayer can be computed with the help of the BET method from the surface area and known molecular structure of the support.

According to a preferred embodiment, the reaction temperature may not fall below the minimum temperature required for the evaporation of the reagent; otherwise condensation of the reagent will occur. Besides, the reagent may not undergo condensation at any point along its path into the reaction space. For these reasons, the reagent temperature must be prevented from dropping below the reaction temperature. The heterogenizing compound and its operating temperature shall be selected such that decomposition of the metal compound and possible condensation of its decomposition products will be avoided.

As is evident from Fig. 2, the second step of the method is carried out with an ethoxysilane compound preferably at about 50 - 400 °C, and in fact, this temperature range is suitable for most alkoxysilane compounds. The lower limit of cited temperature range is determined by the condensation temperature of the alkoxysilane to be evaporated at the pressure applied and the activation energy required for the formation of a desired surface bond. The upper limit is determined by the temperature at which the heterogenizing compound starts to decompose, or alternatively, the other functional group of the compound, which is intended to remain free, begins to react with the support surface.

The reaction of the catalytically active material or compounds thereof and the support is carried out either at ambient pressure or preferably at an elevated pressure. However, the reaction is most advantageously carried out in a partial vacuum. The working pressure of the method is typically 0.01 - 10 MPa, advantageously about 0.01 - 10 MPa. Possible pre- and posttreatment steps are most advantageously performed in a partial vacuum. The gain offered by the partial vacuum lies therein that the reaction space stays cleaner and the diffusion speed is enhanced. The reaction time is not particularly critical with the provision that it is extended so long as to permit the evaporated reagent to interact with the surface-bond sites of the support. Hence, the reaction time can be varied, e.g., in the range 0.5 - 25 h, while a reaction time of 1 - 10 h is typically used for the treatment of a 5 - 20 g batch.

The evaporated heterogenizing compound can be introduced into the reaction space as such, or alternatively, with the help of an inert carrier gas such as nitrogen or a noble gas. Most advantageously, an inert-gas atmosphere is used and the same inert gas is employed as the carrier gas of the evaporated transition metal species.

After the vapour-phase reaction, all the unreacted surface-treatment reagent must be removed from the reaction space as well as the side-products of the reaction between the reagent and the support (e.g., those formed between HCl and the organic residues of the reagent). Accordingly, nitrogen-gas purging is performed at the reaction temperature subsequent to the chemisorption reaction in order to remove the unreacted reagent and the released HCl.

Next, to the modified support surface, or more accurately, to the functional group of the heterogenizing reagent is attached a transition metal compound. The transition metal species is attached to the support by reacting a transition metal compound of the formula MHal₄ or LMHal₃, where M is a transition metal such as Ti, Zr or Hf, Hal is a halogen and L is a group containing a diene-ring structure, to react with an inorganic support modified by a compound of formula I. In a transition metal compound with the LMHal₃ composition, L is most advantageously a cyclopentadienyl group, or alternatively, a penta-, tetra-, tri-, di- or mono-alkyl, monoaryl or monosilyl derivative thereof.

According to an advantageous embodiment, the transition metal compound is a tetramethylcyclopentadienyl n-butylcyclopentadienyl or t-butylcyclopentadienyl compound of the transition metal.

The transition metal compound can be attached to the support under surface-bond-selective conditions, whereby the conditions are adjusted as described above. The attachment of the transition metal compound to the support surface under surface-bond-selective conditions is described, e.g., in FI Pat. Nos. 84608, 84609, 95276 and in FI Pat. Appl. No. 933998.

Alternatively, the transition metal compound can be attached using a conventional impregnation technique. Here, the modified support is slurried in a suitable solvent, into which the transition metal compound is added. The product is separated by filtration, followed by washing.

After the catalytically active compounds of the transition metal have been attached to the support, the catalyst can be modified: it can be preactivated by adding thereto conventional organometal compounds, particularly Al-alkyl compounds which are typically used as cocatalysts. Suitable organometal compounds are, e.g., TMA (trimethyl aluminium), TEA (triethyl aluminium), DEALOX (diethyl aluminium ethoxide), TEB (triethyl boron), TIBA (tri-isobutyl aluminium), DEAC (diethyl aluminium chloride) and MAO (methyl aluminium oxane), just to mention a few. Of these, TMA, TEA, TIBA and DEALOX are considered particularly advantageous for the purposes of the present invention.

The cocatalyst may also be an anionic compound such as a compound of the tetrapentafluorophenylboron or tri(pentafluorophenyl)boron type. With regard to anionic compounds, reference is made to, e.g., WO Published Application No. WO 93/25590.

Furthermore, mixtures of the above-mentioned compounds can be used as cocatalysts, whereby the catalyst sensitivity to poisoning can be reduced.

Obviously, the cocatalyst may be added into the polymerization reactor in a conventional manner. In this case, the catalysts are transferred away from the reaction chamber under a nitrogen atmosphere for cocatalyst addition and polymerization. However, if the catalysts are preactivated in the above-described manner, no cocatalyst is needed during polymerization.

The present novel catalyst is capable of catalyzing the homo- and copolymerization of ethene and other 1-olefins such as propene, 1-butene, 1-pentene, 4-methyl-1-pentene, 1-hexene or 1-octene. According to an embodiment, these catalysts can catalyze the polymerization of ethene in gas phase at an excess pressure of at least 2000 kPa resulting in a polyethene grade with a narrow molecular weight distribution, whereby the polydispersity index is maximally 5, advantageously smaller than 3.

According to the invention, the homo- or copolymerization of 1-olefin monomers is carried out in a single or multiple polymerization reactors as slurry or gas-phase polymerization such that the olefin monomers, or mixtures thereof, are contacted at an elevated pressure with a catalyst according to the present invention. The polymerization pressure may be varied depending on the process requirements. Typically, the pressure is in the range 1.5 - 1000 bar (150 - 100,000 kPa), advantageously at least 5 bar (500 kPa). Advantageously, the pressure is about 5 - 100 bar (500 kPa - 10,000 kPa) and particularly advantageously about 7 - 75 bar (700 kPa - 7500 kPa). In slurry processes, the pressures are generally somewhat higher than those applied in gas-phase polymerization processes. The polymerization temperature is about 20 - 300 °C, advantageously about 50 - 275 °C. Hydrogen partial pressure is about 0 - 20 bar (2000 kPa), advantageously at least about 0.1 (10 kPa), and particularly advantageously at least about 0.5 bar (50 kPa) and maximally about 10 bar (1000 kPa).

In the following, the present invention will be examined in greater detail with the help of an exemplifying embodiment.

### Example

Next, the preparation of a zirconocene procatalyst and the use of such a procatalyst in ethene polymerization will be described. The preparation of the procatalyst comprises two steps: The first step is formed by a treatment of a silicon dioxide support with a cyclopentadienyl compound under surface-bond-selective conditions in order to achieve a modified support surface. Subsequently, the second step comprises attaching zirconium to the support surface from said cyclopentadienyl compound. The cocatalyst used in this product is methylaluminium oxane.

### Preparation of support

An 8.4 g batch of a commercially available silica grade, SiO₂, with a large surface area (320 m²/g) (product name EP 10, manufacturer Crossfield Ltd.), which had been heat-treated at 200 °C for 16 h, was transferred into the reaction chamber. The reactor was evacuated and the support batch was preheated at +200 °C for 3 h. Next, a 6 ml aliquot of Cp(CH₂)₃Si(OEt)₃, evaporated at +100 °C, was introduced using nitrogen as the carrier gas into the reactor chamber which had been brought to a +200 °C operating temperature. The pressure was 0.028 MPa and the reaction was continued for 2 h, after which time the thus treated support was still flushed with a pure nitrogen gas flow for 1 h. Product A (sample 1) obtained from this treatment contained 8.2 wt.-% carbon. The other support samples, marked as sample nos. 2, 3 and 4, were prepared in the manner described above with the exception that the silica batches were heat-treated at 600 °C for 16 h and the reaction temperatures were varied so that sample no. 2 was processed at 200 °C, while sample nos. 3 and 4 were processed at 250 °C. Results from carbon content analyses were as follows: 7.1 wt.-% for sample no. 2, 6.9 wt.-% for sample no. 3 and 6.6 wt.-% for sample no. 4.

### Preparation of procatalyst

The reaction product A (2.5 g aliquot of sample no. 3) was further treated with BuLi (3.75 mmol) in 50 ml of THF solution, after which the product was washed three times with THF. Subsequent to this lithium treatment, the product was suspended in 50 ml THF, and CpZrCl₃ (1.3 mmol) dissolved in THF was added into the suspension. The reaction was allowed to continue for 24 h at room temperature, after which time the procatalyst product was washed twice with 30 ml THF and once with 30 ml diethyl ether and dried in a vacuum.

The preparations of the other procatalysts were carried out in the same manner as described above. Analysis results of the procatalysts are given in Table 2 below.

All the procatalysts were prepared in an inert nitrogen atmosphere using the Schlenk method.

As an example, the preparation of procatalyst sample no. 3 is described:
A batch (2.5 g) of the modified silica support sample no. 3 was suspended in Tiff (50 ml). Hexane solution of butyl lithium (1.5 ml, 3.75 mmol) was added into the suspension. The suspension was agitated vigorously overnight at room temperature. Next, the solids were separated and washed three times with 30 ml THF. The solids were suspended in THF (50 ml) and cyclopentadienyl zirconiumtrichloride solution (0.35 g, 1.3 mmol) in THF was added dropwise under nitrogen atmosphere. The suspension was agitated vigorously overnight at room temperature, after which the solids were separated and washed twice with THF (30 ml) and once with diethylether (30 ml). Finally, the product was dried in a vacuum at +45 °C overnight. The product had a light yellow colour. Results from analyses on the vacuum-dried procatalyst were as follows: Zr 3.0 wt.-% and Cl 1.1 wt.-%.

The preparations of the other procatalysts were carried out in the same manner as described in the preceding example above and the amounts of starting materials are given in Table 1. Analysis results of the procatalysts are given in Table 2 below.

### Preparation of reference catalyst no. 1

Reference catalyst sample no. 1 was prepared from a heat-treated (600 °C / 16 h), unmodified silicon dioxide support (EP 10) in the same manner as described above for the preparation of the procatalysts. The silica support (2.2 g) was suspended in 50 ml Tiff. A hexane solution of butyl lithium (1 ml, 2.5 mmol) was added into the suspension and the suspension was agitated vigorously overnight at room temperature. The solids were separated and washed three times with 30 ml Tiff and suspended in THF (50 ml). Cyclopentadienyl zirconiumtrichloride solution (0.31 g, 1.2 mmol) in Tiff was added dropwise in the suspension and the mixture was agitated vigorously overnight at room temperature. The solids were separated and washed twice with 30 ml THF and once with 30 ml diethylether. Finally, the product was dried in a vacuum at +40 °C overnight. The product had a light yellow colour. Results from analyses on the vacuum-dried procatalyst were as follows: Zr 2.2 wt.-% and Cl 1.5 wt.-%.

### Preparation of reference catalyst no. 2

Reference catalyst sample no. 2 was prepared from a heat-treated (600 °C / 16 h), unmodified silicon dioxide support (EP 10) in the following manner. The silica support (2.5 g) was suspended in 50 ml THF and CpZrCl₃ solution (0.36 g, 1.4 mmol) in THF was added dropwise into the suspension. The mixture was agitated vigorously overnight at room temperature, whereafter the solids were separated and washed twice with 30 ml THF and once with 30 ml diethylether. Finally, the product was dried in a vacuum at +45 °C overnight.

### Preparation of reference catalyst no. 3

Reference catalyst sample no. 3 was a homogenous CpZrCl₃ solution in toluene, prepared by dissolving 45 mg CpZrCl₃ in 120 ml desiccated toluene at room temperature. This solution was then used as the catalyst in the comparative polymerization test.

**Table 1.**

| Amounts of starting materials used in syntheses of procatalysts using CpZrCl₃ as the metal chloride. | | | | | |
|---|---|---|---|---|---|
| Support | m [g] | n [mmol] | BuLi [ml] | m [g] | n [mmol] |
| Sample 1 | 6.03 | 7.5 | 3 | 0.84 | 3.2 |
| Sample 2 | 2.5 | 3.75 | 1.5 | 0.37 | 1.4 |
| Sample 3 | 2.5 | 3.75 | 1.5 | 0.35 | 1.3 |
| Sample 4 | 2.0 | 2.5 | 1 | 0.28 | 1.1 |
| SiO₂ | 2.2 | 2.5 | 1 | 0.31 | 1.2 |
| SiO₂ | 2.5 | - | - | 0.36 | 1.4 |

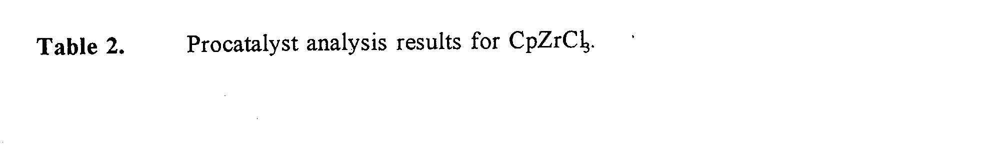

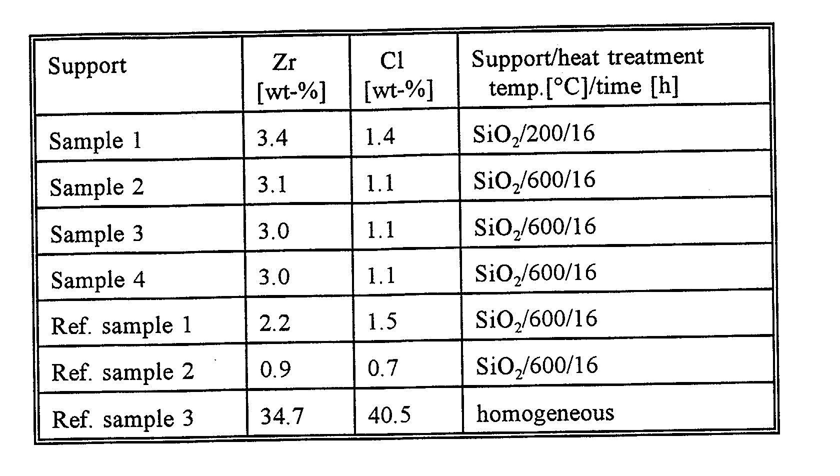

### Ethene polymerization

Ethene homopolymerization was carried out in a reactor of 1 l volume. The heptane medium (about 450 g) was first released into the vacuumed reactor, whereafter the MAO (methylaluminium oxane) cocatalyst was introduced into the reactor. Next into the reactor was released a 7.4 mg batch of procatalyst no. 3 dispersed in toluene, said amount corresponding to 2.72 x 10⁻⁶ mol Zr. The actual polymerization was begun by releasing ethene into the reactor. As the ethene was consumed, more ethene was continually added into the reactor during the entire polymerization process.

The polymerization conditions were as follows: temperature 80 °C, pressure 2.5 bar, polymerization time 0.5 h, Al(MAO)/Zr mole ratio 2000.

Polymerization was terminated by closing the ethene infeed valve. The polymerization product was filtered, dried and weighed. The activity of the catalyst was 473 g/g cat/h, corresponding to 1287 kg PE/mol Zr/h.

Determination of the polyethene product molecular weight by the GPC method gave the following results: Mₙ = 79,800 g/mol, M_{w} = 209,900 g/mol and molecular weight distribution expressed as M_{w}/Mₙ was 2.63.

Other ethene polymerization tests were carried out in the same manner as described in the preceding example above and the analysis results are given in Table 3 below.

**Table 3.**

| Ethene polymerization results. | | | | | | | |
|---|---|---|---|---|---|---|---|
| Catalyst | Added Zr [molx10⁻⁶] | Solid catalyst [mg] | Product [g] | Activity [g PE/g cat/h] | Activity [kg PE/mol Zr/h] | M_{w} | M_{w}/Mₙ |
| Sample 3 | 4.2 | 12.8 | 5.1 | 797 | 2422 | 119 000 | 2.48 |
| Sample 4 | 12.6 | 38.3 | 12.1 | 632 | 1921 | 106 000 | 2.31 |
| Sample 2 | 21.1 | 62.0 | 11.0 | 355 | 1043 | 103 000 | 2.22 |
| Sample 1 | 2.9 | 7.9 | 1.75 | 473 | 1287 | 210 000 | 2.63 |
| Ref. sample 1 | 4.2 | 17.5 | 1.4 | 160 | 664 | 135 000 | 2.63 |
| Ref. sample 2 | 8.4 | 85.4 | 1.1 | 26 | 261 | 221 000 | 2.47 |
| Ref. sample 3* | 4.2 | 1.1 | 2.5 | - | 1193 | 233 000 | 2.73 |

| | | | | | | | |
|---|---|---|---|---|---|---|---|
| * homogeneous catalyst | | | | | | | |

From the above-given test results it can be seen that when the heterogenized support is prepared under surface-bond-selective conditions, good catalyst activity results; in fact, a comparison with heterogenized catalyst sample nos. 1 and 2, which were prepared in liquid phase, shows that activities of the catalysts prepared according to the present invention were up to tenfold per amount of catalyst metal used and up to 30-fold per amount of catalyst used in the polymerization process. Catalyst sample no 3 prepared in the Example substantiates that surface-bond-selective conditions have a major impact on the properties of the prepared catalyst so that the catalyst activity can become over twofold in comparison with a homogeneous catalyst system.

The narrow molecular weight distribution of the product made using the catalyst according to the invention is anexplicit indication of the high surface homogeneity of the catalyst according to the invention.

By contrast, when a zirconiumchloride catalyst is prepared in a conventional manner directly on a silica or alumina support surface under surface-bond-selective conditions, the product has a rather broad molecular weight distribution (in the range 15 - 21) (cf. FI Pat. Appl. No. 933,998).

## Claims

1. A procatalyst for the preparation of olefin polymerization catalysts, said procatalyst comprising
- a support and
- a transition metal or compound thereof attached to said support,
**characterized** in that
- said transition metal or said compound thereof is bonded to said support via a group having a structure according to formula Ia
-R¹SiR² ₘX₍₂₋ₘ₎- (Ia)
and/or formula Ib
-R¹SiR²ⁿX₍₁₋ₙ₎- (Ib)
in which formulas
m is an integer 0, 1 or 2,
n is an integer 0 or 1,
X is a hydrolyzable group, capable of reacting with the hydroxy groups or the metal-oxygen-metal bridges of an inorganic oxide,
R¹ is a nonhydrolyzable group to which said transition metal or said compound thereof is bonded, and
R² is a lower alkyl group.

2. A procatalyst as defined in claim 1, **characterized** in that in the compound according to formula Ia or Ib, R¹ is a hydrocarbon group according to the formula R³R⁴ in which R³ is a group capable of bonding transition metal, or compounds thereof, and R⁴ designates a -(CH₂)ₖ group, where k is an integer in the range 1 - 4.

3. A procatalyst as defined in claim 2, **characterized** in that R³ is a cyclopentadienyl group and R⁴ represents a propylene group.

4. A method for preparing olefin polymerization catalysts, in which method
- a catalytically active transition metal or a compound thereof is attached to a support in order to prepare a procatalyst and
- said procatalyst is contacted with a cocatalyst in order to prepare a catalytically active product,
**characterized** in that
- the support suited for bonding said transition metal is obtained by reacting an inorganic oxide compound with a compound according to formula I
R¹AR² ₘX₍₃₋ₘ₎ (I)
in which formula
A is silicon, germanium or tin,
R¹ is a nonhydrolyzable group, capable of forming a bond with the transition metal or said compound thereof and of forming a bond with A via a linker group,
R² is an alkyl group,
X is a hydrolyzable group, capable of reacting with the hydroxy groups or the metal-oxygen-metal bridges of an inorganic oxide, and
m is an integer 0, 1 or 2, and
- the reaction between said inorganic oxide compound and said compound according to formula I is performed under surface-bond-selective conditions.

5. A method as defined in claim 4, **characterized** in that A in the compound according to formula I is silicon.

6. A method as defined in claim 4 or 5, **characterized** in that X in the compound according to formula I is an alkoxy (-OR⁵), carboxylic acid (-OOCR⁵), amine (-NR⁵ ₂) or chlorine (-Cl), whereby R⁵ is an aliphatic hydrocarbon chain with 1 - 10 carbon atoms.

7. A method as defined in any of claims 4 to 6, **characterized** in that X in the compound according to formula I is a methoxy or an ethoxy group.

8. A method as defined in claim 4, **characterized** in that R¹ in the compound according to formula I is a hydrocarbon group capable of forming a strong covalent bond with said transition metal.

9. A method as defined in claim 8, **characterized** in that R¹ can form a strong covalent bond with at least one of the following metal species: Sc, Ti, V, Cr, Mn, Fe, Co, Y, Zr, Nb, Mo, Tc, Ru, Rh, Hf, Ta, W, Re, Os or Ir, and particularly Cr, Hf, Ti or Zr.

10. A method as defined in any one of claims 4 to 9, **characterized** in that R¹ in the compound according to formula I designates a hydrocarbon group according to formula R³R⁴, where R³ is a group capable of bonding transition metals or compounds thereof and R⁴ is a -(CH₂)ₖ group, where k is an integer in the range 1 - 4.

11. A method as defined in claim 10, **characterized** in that R³ is a cyclopentadienyl group.

12. A method as defined in any one of claims 4 - 11, **characterized** in that said compound according to formula I is (EtO)₃Si(CH₂)₃Cp.

13. A method as defined in claim 4, **characterized** in that the transition metal is bonded to the support by reacting a transition metal compound according to formula MHal₄ or LMHal₃, where M is a transition metal, Hal a halogen and L a group with a diene-ring structure, with an inorganic oxide modified with the compound according to formula I.

14. A method as defined in claim 13, **characterized** in that in the transition metal compound according to said formula LMHal₃, L is a cyclopentadienyl group, or alternatively, a penta-, tetra-, tri-, di- or mono-alkyl, monoaryl or monosilyl derivative thereof.

15. A method as defined in claim 14, **characterized** in that said transition metal compound is tetramethylcyclopentadienyl, n-butylcyclopentadienyl or t-butylcyclopentadienyl.

16. A method as defined in any of the foregoing claims, **characterized** in that said support is silicon dioxide, aluminium oxide, silicon dioxide-aluminium oxide, magnesium oxide, magnesium silicate, titanium oxide or zirconium oxide.

17. A method as defined in any of the foregoing claims, **characterized** in that said cocatalyst is an organometal compound or an anionic compound or a mixture thereof.

18. A method as defined in claim 17, **characterized** in that said organometal compound is TMA (trimethylaluminium), TEA (triethylaluminium), DEALOX (diethylaluminium ethoxide), TEB (triethyl boron), TIBA (tri-isobutyl-aluminium), DEAC (diethylaluminium chloride) and MAO (methylaluminium oxane).

19. A method as defined in claim 17, **characterized** in that said anionic compound is of the tetrapentafluorophenylboron or tri(pentafluorophenyl)boron type.

20. A method as defined in any of the claims 4 to 19, **characterized** in that the vapour pressure of the compound according to formula I is maintained sufficiently high and the reaction time with said inorganic oxide sufficiently long such that the amount of said compound according to formula I is kept so high as to at least saturate all the surface-bond sites available on the inorganic oxide material.

21. A method for polymerizing olefins in the presence of a catalyst, **characterized** in that a catalyst is used prepared according to any one of the claims 4 to 20.

22. A method as defined in claim 21, **characterized** in that said method is used for homo- or copolymerization of ethene, propene, 1-butene, 1-pentene, 4-methyl-1-pentene, 1-hexene or 1-octene.
